Europäisches Patentamt

European Patent Office

Office européen des brevets

(19)

(11) **EP 1 591 209 A2**

(12) **EUROPÄISCHE PATENTANMELDUNG**

(43) Veröffentlichungstag:
**02.11.2005 Patentblatt 2005/44**

(51) Int Cl.⁷: **B25J 9/16**

(21) Anmeldenummer: **05009072.9**

(22) Anmeldetag: **26.04.2005**

(84) Benannte Vertragsstaaten:
**AT BE BG CH CY CZ DE DK EE ES FI FR GB GR
HU IE IS IT LI LT LU MC NL PL PT RO SE SI SK TR**
Benannte Erstreckungsstaaten:
**AL BA HR LV MK YU**

(30) Priorität: **30.04.2004 DE 102004021468**

(71) Anmelder: **KUKA Roboter GmbH
86165 Augsburg (DE)**

(72) Erfinder: **Keibel, Andreas, Dr.
86161 Augsburg (DE)**

(74) Vertreter: **Lempert, Jost
Patentanwälte,
Dipl.-Ing. Heiner Lichti,
Dipl.-Phys. Dr. rer. nat. Jost Lempert,
Dipl.-Ing. Hartmut Lasch,
Postfach 41 07 60
76207 Karlsruhe (DE)**

(54) **Verfahren zum Steuern einer Maschine, insbesondere eines Industrieroboters**

(57) Die Erfindung betrifft ein Verfahren zum Steuern einer Maschine, insbesondere eines Roboters, wie eines Mehrachs-Industrie-Roboters, bei dem die Steuerung unter Berücksichtigung bearbeitungsprozess-eigener Freiheitsgrade zur Vermeidung kinematischer Zwangslagen erfolgt.

Fig. 3

EP 1 591 209 A2

**Beschreibung**

Die Erfindung betrifft ein Verfahren zum Steuern einer Maschine, insbesondere eines Roboters, wie eines Mehrachs-Industrie-Roboters.

Maschinen mit beweglichen Teilen, wie zum Zustellen eines Werkzeugs zu einem Werkstück oder vice versa können in kinematische Zwangslagen geraten. Dies gilt insbesondere für Handhabungsgeräte, wie Mehrachs-Industrie-Roboter, die eine Vielzahl von beweglichen Achsen aufweisen von denen zumindest zwei nicht parallel sind. Derartige kinematische Zwangslagen sind insbesondere Singularitäten, wie Streckstellungs-Singularitäten oder solche, in deren Umgebung es beim Bahnfahren eines Roboters zu erhöhten Beschleunigungen und Geschwindigkeiten einzelner Achsen kommen kann. Es besteht die Gefahr, dass Antriebe im Bereich singulärer Stellungen, eine erhöhte Beschleunigung nicht aufbringen können und die Bewegung des geführten Werkzeugs unkontrolliert von einer Sollbahn abweicht oder aber die Steuerung aufgrund der singulären Stellung überhaupt die Bewegung anhält. Kinematische Zwangslagen sind darüber hinaus Achsanschläge, überhöhte Beschleunigungen und Geschwindigkeiten sowie auch Hindernisse im Arbeitsraum.

Es wurde versucht, derartige kinematische Zwangslagen in verschiedener Weise in den Griff zu bekommen, indem beispielsweise Handachsen auf Achsebene von einer nicht singulären Stelle durch die Singularität hindurch zu einer anderen (gegenüberliegenden) Position interpoliert wurden, und Achsen kartesisch gesteuert wurden. Derartige Vorgehensweisen sind teils mit häufigen Fehlversuchen, teils mit weiteren zusätzlichen Problemen verbunden.

Der Erfindung liegt daher die Aufgabe zugrunde, ein Verfahren zum Steuern von Maschinen mit beweglichen Teilen, insbesondere Mehrachs-Industrie-Robotern anzugeben, das die vorgenannten Nachteile vermeidet.

Erfindungsgemäß wird die genannte Aufgabe bei einem Verfahren der eingangs genannten Art dadurch gelöst, dass die Steuerung unter Berücksichtigung bearbeitungsprozess-eigener Freiheitsgrade zur Vermeidung kinematischer Zwangslagen erfolgt.

Erfindungsgemäß wird also die Bewegung so gesteuert, dass unter Berücksichtigung bearbeitungsprozess-eigener Freiheitsgrade die oben genannten kinematischen Zwangslagen vermieden werden.

Die bearbeitungsprozess-eigenen Freiheitsgrade ergeben sich aufgrund vorhandener Symmetrien bei vielen Verarbeitungsprozessen.

Gemäß bevorzugter Ausgestaltung ist vorgesehen, dass das Geschwindigkeitsprofil der Bewegung nicht verändert wird und/oder die Geschwindigkeit der Bewegung nicht herabgesetzt wird. Im Rahmen der Erfindung werden (nur) Freiheitsgrade des Bearbeitungsprozesses ausgenutzt, um diese als solche beizubehalten. Dabei wird durch den jeweiligen Prozess gegebenen Freiheitsgrade im N-dimensionalen Raum in einen vom Bearbeitungsprozess definierten M-dimensionalen Raum hin ausgewichen, um ungünstigen Stellungen fern zu bleiben.

So kann beim Bohren das den Bohrer haltende und antreibende Werkzeug um die Bohrerachse gedreht werden, ohne dass das Bearbeitungsergebnis geändert wird. Es ergibt sich ein rotorischer Freiheitsgrad.

Ein Werkstück, das an einem feststehenden Bandschleifer herangeführt wird, kann auf der gesamten planen Fläche des Bandes bearbeitet werden. Es ergeben sich zwei translatorische Freiheitsgrade parallel zur Ebene des Bandes.

Ein Laserschweißer kann (wie im Beispiel des Bohrers) um die Achse des Strahls und gegebenenfalls in der Entfernung variiert werden, ohne dass das Arbeitsergebnis verändert wird. In gewissen Fällen kann zusätzlich der Auftreffwinkel des Strahls in gewissen Grenzen variiert werden, so dass sich (in Grenzen) insgesamt vier Freiheitsgrade ergeben.

Die gewonnenen Freiheitsgrade sind in der Regel begrenzt auf einen bestimmten Verfahrbereich und weisen obere und untere Grenzwerte auf. So darf das Werkstück die Schleiffläche nicht verlassen, ein Bohrer ein Stromkabel nicht aufwickeln (indem das Bohrerwerkzeug mehrmals um 360° verdreht wird).

Derartige bearbeitungsprozess-eigene Freiheitsgrade ergeben sich ebenfalls bei vielen anderen Bearbeitungsvorgängen, wie Sprühen, Spritzen bzw. Lackieren (mit rotationssymmetrischem Strahl), Kleben, Schleifen, auch mit rotationssymmetrischem Schleifgerät, Sandstrahlen, Bahnschweißen, Fräsen, Polieren, Bürsten, Entlacken mittels eines Lasers, Senken.

Ein wesentlicher Vorteil des erfindungsgemäßen Verfahrens liegt darin, dass ohne zusätzliche Hardware sowohl das Fahrverhalten als auch die Einsatzfähigkeit von Maschinen, insbesondere Mehrachs-Industrie-Robotern verbessert werden. Im Rahmen der bearbeitungsprozess-eigenen Freiheitsgrade können die Achsen beispielsweise eines Industrieroboters optimal gestellt und verfahren werden, um so problematischen Achsstellungen und singulären Stellungen möglichst fern zu bleiben.

Gemäß einer bevorzugten Ausgestaltung der Erfindung ist vorgesehen, dass zumindest ein hinreichender Abstand von kinematischen Zwangslagen eingehalten wird, wobei ein möglichst geringer Abstand anzustreben ist. Dies geschieht vorzugsweise dadurch, dass mindestens eine Gütefunktion, die den Abstand kinematischer Zwangslagen beinhaltet, bestimmt wird.

In einer ersten bevorzugten Ausgestaltung ist dabei vorgesehen, dass mindestens eine Gütefunktion $G_{Li}$ des Abstandes zu Achsanschlägen bestimmt wird. Die Gütefunktion $G_{Li}$ ist eine Funktion der Achsstellung $q_i$ sowie der unteren und oberen Achsgrenzen $L_{mini}$, $L_{maxi}$ der Achse i gemäß $G_{Li} = f (q_i, L_{mini}, L_{maxi})$. Die Gütefunktion $G_{Li}$ ist eine stetige und auch stetig differenzierbare Funktion, die in der Mitte des Verfahrbereichs 0 ist und exakt am Rande des Verfahrbereichs einen Maximalwert aufweist. Ein Beispiel für eine Gütefunktion des Abstandes ist $G(q_i) = ax^2$, mit a = ¼ $(L_{maxi} - L_{mini})^2$ und $x = (q_i - ½ (Lmaxi + Lmini))$.

Gemäß einer weiteren bevorzugten Ausgestaltung ist vorgesehen, dass mindestens eine Gütefunktion $G_{Si}$ des Abstandes zu singulären Stellungen bestimmt wird. Dabei gilt $G_{si} = f(q_i)$ für Singularität i. Diese Gütefunktion ist dabei abhängig von der Konstruktion der Maschine, insbesondere der Roboterkonstruktion. Bei einer Zentralhand ist beispielsweise die Singularität in der Streckstellung der vorletzten Achse A5 erreicht, was z.B. der Nullstellung dieser Achse entspricht. In diesem Fall steigt der Wert der Gütefunktion zu dieser Achsstellung hin an und erreicht genau bei 0 seinen Maximalwert.

Eine weitere bevorzugte Ausgestaltung des Verfahrens sieht vor, dass mindestens eine Gütefunktion des Abstandes zu dynamischen Extremwerten bestimmt wird, wobei insbesondere eine Gütefunktion $G_{Vi}$ des Abstandes zur maximalen Geschwindigkeit bestimmt wird und/oder eine Gütefunktion $G_{Ai}$ des Abstandes zu maximalen Beschleunigungen bestimmt wird. Es gilt dabei

$$G_{Vi} = f(v_i, V_{maxi}) \tag{1}$$

und

$$G_{Ai} = f(a_i, A_{maxi}), \tag{2}$$

wobei $v_i$ die Achsgeschwindigkeit, $V_{maxi}$ die maximale Achsgeschwindigkeit, $a_i$ die Achsbeschleunigung und $A_{maxi}$ die maximale Achsbeschleunigung jeweils der Achse i ist.

Eine weiter bevorzugte Ausgestaltung der Erfindung sieht vor, dass eine Gütefunktion $G_{Xi}$ des Abstandes zu sonstigen Zwangslagen der Maschine bestimmt wird. Erfindungsgemäß können in Abhängigkeit von der Art der Maschine und des Arbeitsprozesses beliebige weitere Gütefunktionen definiert werden, die auf diese Weise das Fahrverhalten der Maschine bzw. des Roboters beeinflussen sollen, beispielsweise zur Kollisionsvermeidung mit $G_{koll}(\underline{\Psi})$. Dabei gibt ein $G_{koll}(\underline{\Psi})$ an, wie groß die Kollisionsgefahr mit der Umgebung ist. Eingabeparameter der Funktion können dabei aus einem 3D-Arbeitszellenmodell stammen.

In weiterer bevorzugter Ausgestaltung ist vorgesehen, dass ein Extremwert der Gütefunktion bestimmt wird, woraufhin der Roboter eine optimale Stellung einnehmen kann.

Weitere bevorzugte Ausgestaltungen der Erfindung sehen vor, dass eine Mehrfach-Güte $G_M$ aus mehreren Einzel-Gütefunktionen bestimmt wird bzw. insbesondere eine Gesamtgüte $G_{total}$ sämtlicher einzelner Gütefunktionen bestimmt wird, wobei

$$G_{total}(\underline{\Psi}) = \Sigma_0^{N-1} G_{Li}(\underline{\Psi}) + \Sigma_0^{N-1} G_{Vi}(\underline{\Psi}) + \Sigma_0^{N-1} G_{Ai}(\underline{\Psi}) + \Sigma_0^{S-1} G_{Si}(\underline{\Psi}) + \Sigma_0^{X-1} G_{Xi}(\underline{\Psi}) \tag{3}$$

Dabei bezeichnet $\underline{\Psi}$ den Vektor aller Wirkungsrichtungen im Raum. Weiter gilt: N = Anzahl der Achsen, S = Anzahl der singulären Stellungen, X = Anzahl der sonstigen Verbindlichkeiten im Stellungsraum der Maschine bzw. des Roboters. Ausgehend von dem Stützvektor $\underline{\Psi}$ wird eine Möglichkeit des Wertes $\underline{\Psi}$ die Gütefunktion $G_{koll}(\underline{\Psi})$ optimiert.

Die Optimierung der Gütefunktion erfolgt erfindungsgemäß in bevorzugter Weise iterativ, bis der Vektor $\underline{\Psi}$ sich nicht mehr ändert. Zur Berechnung der Güte sind für die Stellungen im Redundanzraum Rücktransformationen in dem Gelenkraum des Roboters zu berechnen. In einer konkreten Ausgestaltung ist erfindungsgemäß vorgesehen, dass zunächst eine Berechnung der kartesischen Positionsvorgaben bzw. der kartesischen Sollstellung erfolgt. Dies ist die Vorgabe der Lage des Werkzeugs im Raum durch die 3 Koordinaten X,Y,Z (in mm) und die Richtung des Werkzeuges in geeigneter Orientierungsdarstellung. Die Vorgabe geschieht durch das Roboterprogramm. Die Bewegungssteuerung des Roboters errechnet im Interpolationstakt (z.B. alle 4 ms) kartesische Zwischenstellungen zwischen den vom Anwender vorgegebenen Stellungen, um den Roboter auf Bahnen bewegen zu können. Zu jeder einzelnen Zwischenstellung werden durch Transformation in den Achsraum die Sollstellungen der Antriebsmotoren (Roboterachsen) ausgerechnet und die Regelung versucht diese so gut es geht anzufahren. Dabei wird für jeden einzelnen Punkt der Bahn mittels der Gesamtgütefunktion eine optimale Stellung innerhalb des Redundanzraums ermittelt und diese anstelle der ursprünglichen Funktion angestrebt auszuführen. Dabei kann weiterhin vorgesehen sein, dass nach Optimierung mit Hilfe der Gütefunktion überprüft wird, ob die Veränderung der Stellung im Redundanzraum zur erhöhten Achsgeschwindigkeiten und/oder Beschleunigungen führt. Anschließend kann gegebenenfalls eine zulässige Überführungsmöglichkeit ausgeführt werden. Der optimale Wert von $\Psi$ ist in der Regel nicht gleich dem Nullvektor, sondern liegt oft sogar am Rande des Redundanzraumes. Da eine solche Position nicht augenblicklich eingenommen werden kann, ist nicht auszuschließen, dass die Antriebe überlastet werden. Um dies zu vermeiden, erfolgt eine Interpolation im Rahmen der zulässigen Beschleunigungen und Geschwindigkeiten entlang der Roboterbahn zu diesem Optimum hin.

Der Vektor $\underline{\Psi}$ aller Wirkungsrichtungen im neuen Raum wird mittels iterativen Verfahren so eingestellt, dass eine Gütefunktion optimal wird. Räumlich kann sich der Roboter also während der Bahnfahrt innerhalb dieses durch $\underline{\Psi}$ und dessen Grenzen gegebenen Vektorraum bewegen, ohne dass der Bearbeitungsvorgang dadurch beeinflusst wird. Dieser Raum bewegt sich während der Bahnfahrt mit dem Roboter im Raum mit.

Zur Optimierung des Vektors $\underline{\Psi}$ wird durch partielle Ableitungen aus einem Startwert ein Gütewert errechnet, aus dem nun der Gradient gebildet wird, dem zum nächsten lokalen Extremwert gefolgt werden kann. Aus einem Startwert $\underline{\Psi}_0$ wird in den einzelnen Gütefunktionen die Nähe zu problematischen Stellungen mit immer größer werdenden Werten "bestraft". Dann ist in der Gesamtgütefunktion das Minimum als Extremwert zu suchen.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im Einzelnen erläutert sind.

Dabei zeigt:

Fig. 1       einen Mehrachs-Industrie-Roboter mit einer durch die Streckstellung gegebenen Singularität bei Erreichen des Arbeitsraumendes;

Fig. 2a-c    verschiedene zulässige Winkelpositionen des Bearbeitungswerkzeugs bei der Durchführung der Bearbeitung gemäß der Fig. 1;

Fig. 3       Vermeidung der Streckstellungssingularität der Fig. 1 durch Berücksichtigung der arbeitsprozess-eigenen Freiheitsgrade gemäß Fig. 2;

Fig. 4a,b    Darstellung der bei einem Roboter seinem Werkzeuge gegebenen Koordinatensysteme und der Transformationen zwischen diesen; und

Fig. 5       Flussdiagramm einer bevorzugten Ausführungsform des erfindungsgemäßen Verfahrens.

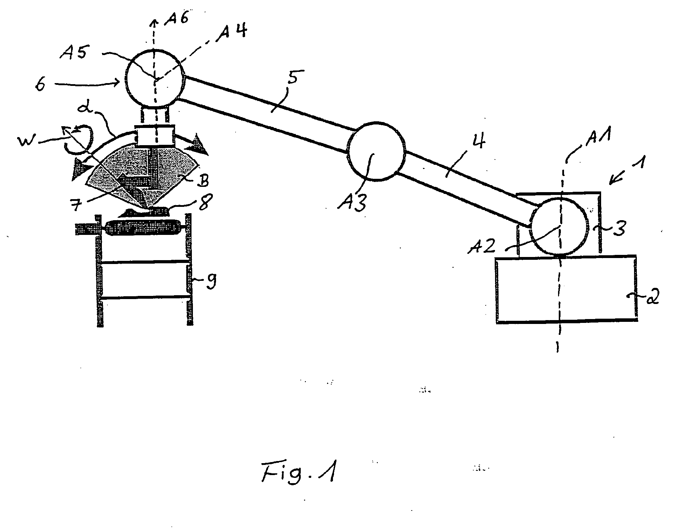

Die Fig. 1 zeigt einen Roboter 1 mit einem Sockel 2, einem auf diesen um die A1-Achse drehbaren Karussell 3, einer an diesem um eine horizontale Achse A2 angelenkten Schwinge 4, einer an dieser ebenfalls um eine horizontale Achse A3 schwenkbaren Arm 5, an dem wiederum die Roboterhand 6 derart angelenkt ist, dass ein an der Roboterhand 6 befestigtes Werkzeug 7 um Achsen A4 bis A6 verschwenkbar ist. Das Werkzeug 7 dient zur Bearbeitung eines auf einem Träger 9 gehaltenen Werkstücks 8, beispielsweise durch Löten, Auftragen von Klebstoffen oder Markierungen.

Durch die grauunterlegte Fläche B ist angedeutet, dass das Werkzeug 6 in seiner Ausrichtung bzw. seiner Wirkachse W über einen Winkelbereich $\alpha$ (der die Fläche B überdeckt) verstellt werden kann, ohne dass das Bearbeitungsergebnis verfälscht wird; mit dem Bereich B bzw. dem Winkel $\alpha$ ist also ein im Schwenkbereich (durch den Wert durch $\alpha$) begrenzter bearbeitungsprozess-eigener Freiheitsgrad gegeben.

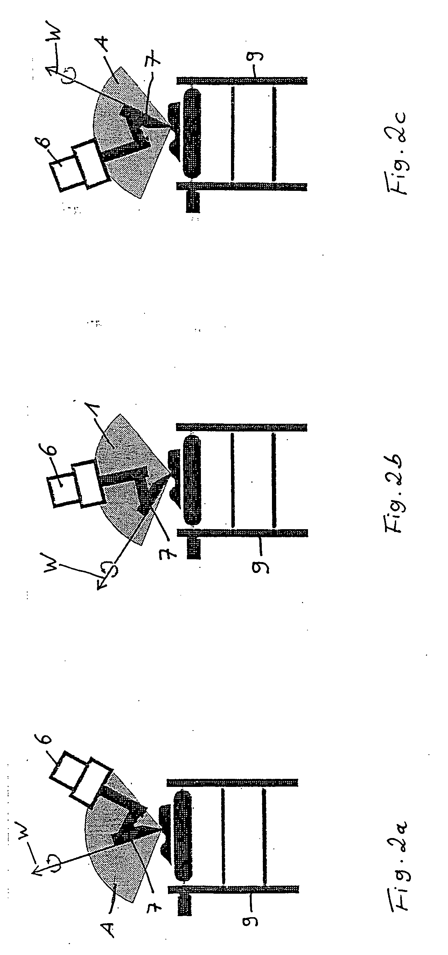

Mögliche, das Arbeitsergebnis nicht verfälschende Stellungen des Werkzeugs 7 sind in der Fig. 2 dargestellt.

Weiter ist in der Fig. 1 ersichtlich, dass sich der Roboter im Bereich der die Schwinge 4 und den Arm 5 gelenkig verbindenden A3-Achse in der Streckstellungs-Singularität befindet, da bei Bewegung der A3-Achse nach oben oder nach unten - unter entsprechender Mitführung der Ausrichtung des Werkzeugs 7 - zwei nicht ohne weiteres aus sich heraus unterscheidbare Bewegungsmöglichkeiten bestehen, um das Werkstück beispielsweise in Richtung näher zum Sockel 2 hin zu bewegen.

Aus den eingangs genannten Gründen sind solche Singularitäten, wie die hier dargestellte Streckstellungs-Singularität am Arbeitsraumende unerwünscht, da die Roboterbewegungen zum Zeitpunkt der Detektion einer solchen Arbeitsraumverletzung (Streckstellung) angehalten und der Bearbeitungsprozess damit unterbrochen wird.

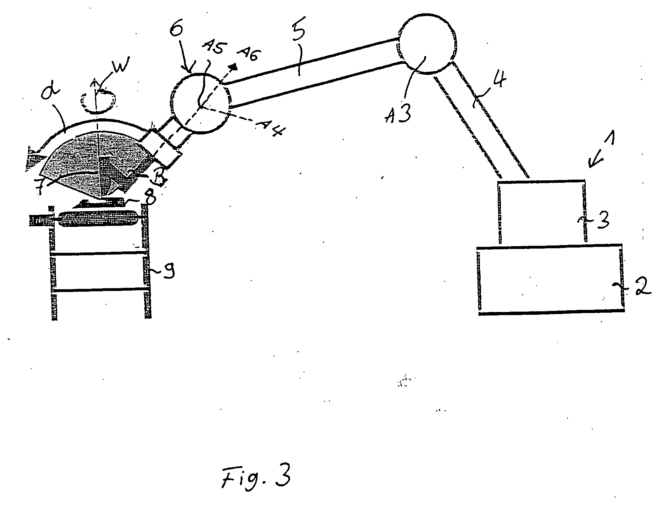

Eine derartige Situation wird vermieden, indem dem Roboter nach dem erfindungsgemäßen Verfahren nicht erlaubt wird, überhaupt in die Position der Fig. 1 zu gelangen, indem gemäß Fig. 3 das Werkzeug 7 innerhalb des zugelassenen Freiheitsgradsbereichs B derart ausgerichtet wird, dass der Roboter mit seiner Schwinge 4 und seinem Arm 5 um die Achse A3 in einer Knickstellung verbleiben kann, ohne dass das Arbeitsergebnis verfälscht wird.

Im regulären Roboterbetrieb wird bei Anwendung des erfindungsgemäßen Verfahrens der Roboterarm kontinuierlich in Richtung der optimalen Stellung gebracht werden. Auch beim manuellen Teachen von Positionen mittels Handbediengerät soll dieser Optimierer ständig mitlaufen können, so dass die abgespeicherten Zielpositionen eines Bearbeitungsvorgangs bereits optimiert sind. Es wird sichergestellt, dass im regulären Programmablauf im Fertigungsbetrieb bei Übergängen zwischen Bahnfahren und Achsstellungs-Interpolationen keine Ausgleichsbewegungen notwendig werden, da schon während des Teach-Ins ständig parallel optimiert wird.

Fährt z.B. ein Roboter eine Position im Punkt-zu-Punkt-Modus (PTP-Modus) an; hat der Anwender bei dieser Stellung die Achsstellung, also jeden einzelnen Achswinkel des Roboterarms hinterlegt. Damit ist die Roboterstellung eindeutig definiert. Anschließend folgt eine Bahn-Bewegung, die durch die 6D-Koordinaten im Raum gegeben ist. Hier wird erfindungsgemäß die Roboterstellung so eingestellt, dass sie innerhalb des Redundanzraumes optimal ist. Dieses Umpositionieren in die optimale Stellung ist hier als "Ausgleichsbewegung" bezeichnet. Den Unterschied der beiden Stellungen verdeutlicht Fig. 3. Während des Ausführens der Ausgleichsbewegung wird der Bearbeitungsprozess im Sinne des Erfinders nicht beeinflusst.

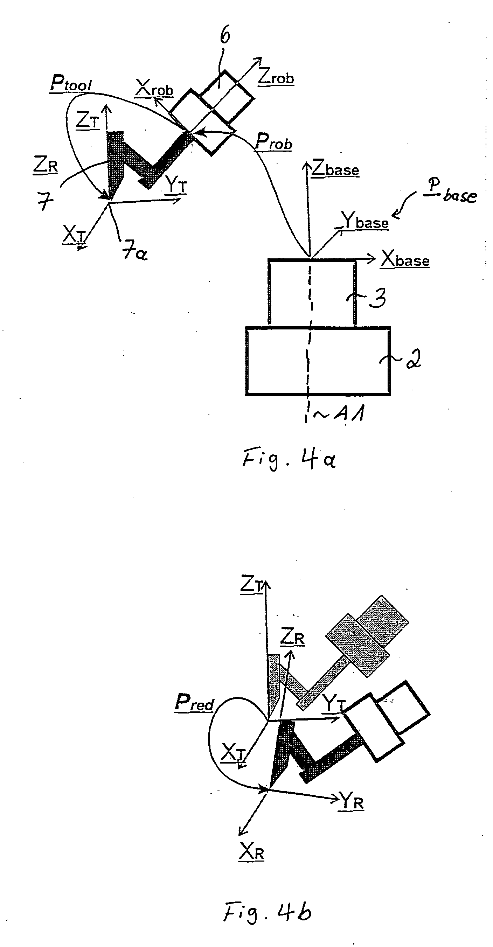

Der Raum, in dem die bearbeitungsprozess-eigenen Freiheitsgrade zur Vermeidung kinematischer Zwangslagen zur Verfügung stehen, ist, wie die Definition dieser Freiheitsgrade als bearbeitungsprozess-eigene beinhaltet, jeweils an dem Bearbeitungsvorgang bzw. -prozess gekoppelt. Bei unterschiedlichen Bearbeitungsvorgängen sind, wie auch eingangs erläutert wurde, auch unterschiedliche Freiheitsgrade und/oder Begrenzungen derselben gegeben. Der Bearbeitungsvorgang wiederum ist mit der Maschine bzw. dem Roboter gehaltenen Werkzeug gekoppelt, unabhängig davon, ob das Werkzeug an der Maschine bzw. dem Roboter befestigt ist oder aber das Werkzeug fest steht, wobei die Maschine bzw. der Roboter das Werkzeug führt. Die Erfindung beinhaltet nun, dass dem Werkzeug ein Werkzeugkoordinatensystem zugewiesen wird, das bestmöglich so ausgerichtet ist, dass die gewonnenen Freiheitsgrade darin günstig zu den Koordinatenachsen ausgerichtet sind. Dies ist in den Fig. 4a und 4b verdeutlicht, in denen die Zusammenhänge zwischen den bei dem Beispiel eines Roboters gegebenen Koordinatensystemen schematisch dargestellt sind.

Mit 2 und 3 sind wiederum Sockel und Karussell eines Roboters 1 bezeichnet, wobei letzteres sich um die A1-Achse dreht, welche der Achse $\underline{Z}_{base}$ des Roboter-Basis Koordinatensystems $\underline{P}_{base}$ entspricht, dessen andere - horizontale - kartesischen Koordinatenachsen $\underline{X}_{base}$, $\underline{Y}_{base}$ sind. Die den Versatz zum Roboterflansch-Koordinatensy-stem $\underline{X}_{rob}$, $\underline{Y}_{rob}$, $\underline{Z}_{rob}$ ($\underline{Y}_{rob}$ ist in Fig. 4a nicht dargestellt. Diese Koordinatenachse ist senkrecht zu $\underline{X}_{rob}$, $\underline{Z}_{rob}$, also senkrecht zum Zeichnungsblatt). Die bezeichnende homogene Transformation ist mit $\underline{P}_{rob}$ bezeichnet. Sie kann in verschiedener Weise mathematisch in verschiedener bekannter Weise beschrieben werden, wie durch Roll-Pitch-Yaw bzw. Roll-Nick-Gier, Euler, Quaternionen, Drehvektor-Drehwinkel, Orientierungsmatrix u.s.w. (hierzu beispielsweise ice.bachelor.fernuni-hagen.de lehre/eth009/HTML/kine1/node3.htm1; de.wikipe.dia.org/wiki/Quaternionen; www.uni-mainz.de/~schoemer/publications/Diss. pdf, S. 8)

Die Lage der Spitze 7A des Werkzeugs 7 mit $\underline{X}_t$, $\underline{Y}_t$, $\underline{Z}_t$ im Koordinatensystem von $\underline{P}_{rob}$ ist mit $\underline{P}_{tool}$ bezeichnet. Erfindungsgemäß kann diese Position im Rahmen des bearbeitungsprozess-eigenen Freiraumes, in dem Redundanzen definiert werden sollen, modifiziert werden. Diesen bearbeitungsprozess-eigenen Freiraum bzw. die entsprechenden Freiheitsgrade bezeichnende Transformation ist in Fig. 4b dargestellt und mit $\underline{P}_{red}$ bezeichnet. Innerhalb $\underline{P}_{tool}$ werden die Freiheitsgrade des Bearbeitungsprozesses definiert. Die Freiheitsgrade können als vektorielle Größen $\underline{\Psi}$ = ($\Psi_1$, $\Psi_2$, ... , $\Psi_N$) ausdrückt werden, mit $\Psi_1$ bis $\Psi_N$ als Komponenten bzw. Koordinaten im neuen Freiraum.

In der Regel lassen sich alle Wirkungsrichtungen direkt in den Koordinatenachsen von $\underline{P}_{tool}$ ausdrücken. Dabei ist $F_i$ eine Komponente des Vektors $\underline{F}$ und gibt die Auswahl über folgende Möglichkeiten, basierend auf den Koordinatenachsen von $\underline{P}_{tool}$ für den Freiheitsgrad i = 1 bis 6 an:

    1. Drehung um X-Achse
    2. Drehung um Y-Achse
    3. Drehung um Z-Achse
    4. Verschiebung entlang X-Achse
    5. Verschiebung entlang Y-Achse
    6. Verschiebung entlang Z-Achse

Kann die Wirkungsrichtung der Freiheitsgrade nicht direkt mit den Koordinatenachsen von $\underline{P}_{tool}$ ausgedrückt werden, dann muss für jeden Freiheitsgrad eine Transformation ergänzt werden. Hier bietet sich z.B. die Darstellungsform nach Denavit-Hartenberg an (beispielsweise www.at-online.fernunihagen.de/lhre/eth009/HTML/kine1/node3.html), bei der vier Werte sowie die Werte der Wirkungsrichtungen der Freiheitsgrade angegeben werden. Diese sogenannten DH-Parameter werden in Form eines Vektors $\underline{D}_i$ angegeben, wobei i = 0 bis 3 $\theta_i$, $d_i$, $\alpha_1$, $a_i$, $n_i$, mit

$\theta_i$ =     Rotation um die Z-Achse [-180°..+180°]
$d_i$ =     Verschiebung auf der Z-Achse
$\alpha_1$     = Rotation auf der neuen X-Achse [-180°..+180°]
$a_i$ =     Verschiebung auf der X-Achse

$n_i$ =     Welcher der Werte die Wirkungsrichtung des Freiheitsrades i ist [0..3].

Aus den Werten $\underline{D}_i$ lässt sich damit jede Art von Freiheitsgraden und deren Wirkungsrichtung modellieren. Sämtliche Freiheitsgrade des Redundanzraumes werden kombiniert zur Matrix $\underline{\mathbf{D}}$, die zusammengesetzt ist aus allen Vektoren $\underline{D}_i$.

Die Gesamttransformation vom Roboterfuß zur Werkzeugspitze ist damit

$$\underline{P}_{total}(\underline{\Psi}) = \underline{P}_{base} * \underline{P}_{rob} * \underline{P}_{tool} * \underline{P}_{red}(\underline{\Psi}) \tag{4}$$

Mit einem Optimierungsverfahren kann nun, ausgehend von der aktuellen Stellung des Roboters dieser optimierte Wert für $\underline{\Psi}$ und damit für die Redundanztransformation $\underline{P}_{red}(\underline{\Psi})$ gefunden und angefahren werden.

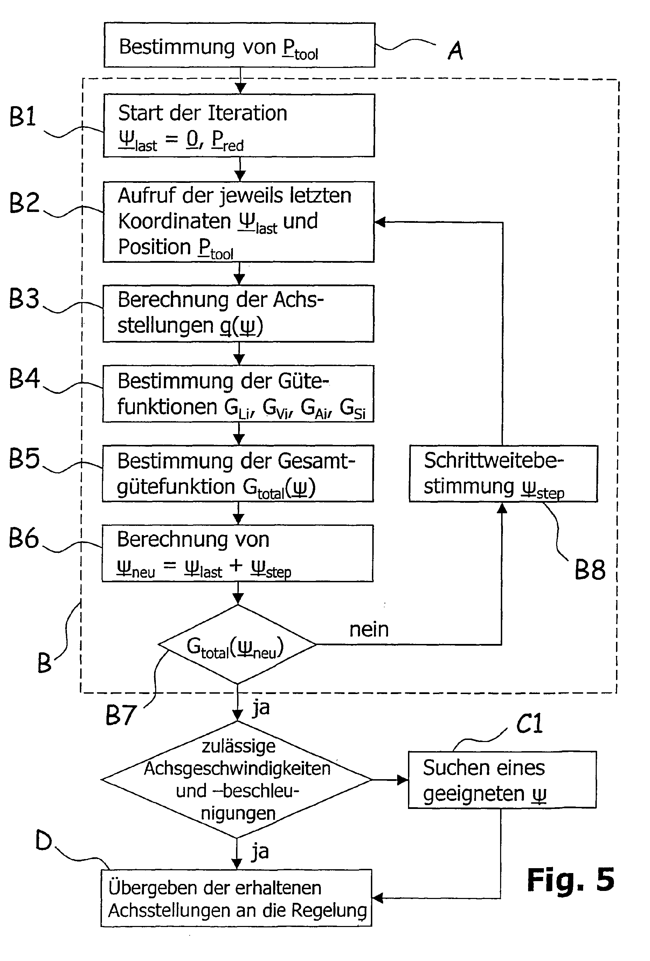

Der Ablauf des erfindungsgemäßen Verfahrens ist in einem Ablaufdiagramm der Fig. 5 dargestellt. Im Rahmen einer konkreten Ausführungsform des erfindungsgemäßen Verfahrens ergeben sich im Einzelnen die folgenden Schritte: Zunächst werden im Rahmen der Interpolation der Bewegungssteuerung (wie sie oben erläutert wurde) die kartesischen Positionsvorgaben in bekannter Weise bestimmt. Das Ergebnis ist die Soll-Roboterposition im Raum als homogene Transformation $\underline{P}_{tool}$ (Schritt A der Fig. 5).

Sodann erfolgt die iterative Optimierung gemäß dem Schrittkomplex B, wobei das Verfahren mit den letzten Koordinaten $\underline{\Psi}_{last}$ im Redundanzraum und der Position $\underline{P}_{tool}$ aufgerufen wird. Im ersten Takt der Bahninterpolation ist dabei $\underline{\Psi}_{last} = \underline{0}$, in allen folgenden Interpolationstakten der Bahn-bewegung wird der Wert aus dem letzten Interpolationstakt als Startwert verwendet (B1, B2).

Während der Optimierung werden die Achsstellungen $q(\underline{\Psi})$ des Roboters herangezogen, die sich durch die Rücktransformation der Position $\underline{P}_{red}$ und $\underline{P}_{tool}$ in den Achsraum des Roboters ergeben (B3).

Während der Optimierungsiteration werden gemäß Schritt B4 die einzelnen Gütefunktionen berechnet. Anschließend wird hieraus die Gesamtgütefunktion $G_{total}(\underline{\Psi})$ gemäß Formel (4) bestimmt (Schritt B5). Gegebenenfalls werden im Weiteren numerisch die partiellen Ableitungen dieser Gesamtgüte bestimmt. Das Ergebnis jedes einzelnen Iterationsschrittes ist ein Schritt im Redundanzraum $\underline{\Psi}_{step}$, der zum $\underline{\Psi}_{last}$ des letzten Taktes hinzuaddiert werden muss: $\underline{\Psi}_{neu} = \underline{\Psi}_{last} + \underline{\Psi}_{step}$. (Schritt B6).

Im folgenden Schritt B7 wird überprüft, ob sich der Wert $G_{total}(\underline{\Psi}_{neu})$ in dem lokalen Extremwert innerhalb des Redundanzraumes befindet oder an der Stelle am Rande des Raumes, der dem (nicht erreichbaren) Optimum am nächsten liegt.

Ist dies nicht der Fall, wird die nächste Iterationsfolge beginnend mit dem Schritt B2 durchgeführt (über B8).

Liegt der Wert $G_{total}(\underline{\Psi}_{neu})$ im lokalen Extremwert innerhalb des Redundanzraumes, wird im weiteren Schritt C geprüft, ob die Veränderung der Stellung im Redundanzraum zu überhöhten Achsgeschwindigkeiten und/oder -beschleunigungen führt. Falls dies der Fall ist, so wird ein $\underline{\Psi}$ bestimmt, das auf einer linearen Verbindung zwischen $\underline{\Psi}_{neu}$ und $\underline{\Psi}_{last}$ liegt, bei dem keine Grenzwertüberschreitungen auftreten.

Ist das Ergebnis befriedigend, so können die ermittelten Achsstellungen des letzten Iterationstaktes direkt an die Regelung übergeben werden (Schritt D).

Der "Weg nach unten" bei der Gütefunktion kann nach verschiedenen herkömmlichen Methoden bestimmt werden, so der Gradienten-Methode, einem vereinfachten Verfahren zur Bestimmung der optimalen Richtung durch Untersuchung von einer gewissen Anzahl, beispielsweise acht unterschiedlichen Richtungen, die also in diesem Falle um 45° versetzt sind unter Auswahl derjenigen, die am steilsten "nach unten zeigt". In diesem Falle werden keine eigentlichen Ableitungen benötigt. Dieses Verfahren ist ein sehr robustes Verfahren. Weiterhin kann die Gauss-Newton-Methode oder das Verfahren nach Levenberg-Marquardt eingesetzt werden.

Im Allgemeinen wird das Verfahren einen Wert für $\underline{\Psi}$ liefern, der am Rande des Redundanzraumes liegt. Anschaulich kann man sich einen zweidimensionalen Vektor $\underline{\Psi}$ als Eingangsgröße einer Gütefunktion gut vorstellen: Wird der Definitionsbereich von $\underline{\Psi}$ nicht beschränkt, ergibt sich eine weitläufige Gebirgslandschaft mit glatter Oberfläche. Die Gipfel markieren kinematische Zwangslagen wie Achsanschläge und Singularitäten. Allerdings weist Gebirgslandschaft $\underline{\Psi}$ nur dann Gipfel auf, wenn auch wirklich eine kinematische Zwangslage im Definitionsraum von $\underline{\Psi}$ erreicht wird. Das ist nur dann der Fall, wenn der Roboter durch verändern von $\underline{\Psi}$ in eine solche Lage gebracht werden könnte.

Im Allgemeinen wird der Definitionsraum von $\underline{\Psi}$ allerdings weit weg von den Gipfeln liegen und dann wird die Gütefunktion wie die Überlagerung der verschiedenen Hänge der einzelnen Gipfel aussehen. Hierbei wird sich nur sehr selten eine "Troglage" ausbilden, bei der ein optimales $\underline{\Psi}$ als lokales Minimum innerhalb des Definitionsbereiches liegt. Anschaulich kann man sich eine Gummihaut vorstellen, in die von unten nach oben die Gipfel gedrückt sind. Auf dem sich so ergebenden weitläufigen Gebirge gibt es einen sehr kleinen zusammenhängenden Bereich, in dem $\underline{\Psi}$ definiert ist. Dieser Bereich wird im Allgemeinen in eine Richtung abfallen und das zulässige, optimale $\underline{\Psi}$ liegt dementsprechend am Rande seines Definitionsbereiches.

**Patentansprüche**

1. Verfahren zum Steuern einer Maschine, insbesondere eines Roboters, wie eines Mehrachs-Industrie-Roboters, **dadurch gekennzeichnet, dass** die Steuerung unter Berücksichtigung bearbeitungsprozess-eigener Freiheitsgrade zur Vermeidung kinematischer Zwangslagen erfolgt.

2. Verfahren nach Anspruch 1, **dadurch gekennzeichnet, dass** die Steuerung derart erfolgt, dass zumindest ein hinreichender Abstand von kinematischen Zwangslagen eingehalten wird.

3. Verfahren nach Anspruch 1 oder 2, **dadurch gekennzeichnet, dass** mindestens eine Gütefunktion, die den Abstand kinematischer Zwangslagen bewertet, bestimmt wird.

4. Verfahren nach Anspruch 3, **dadurch gekennzeichnet, dass** ein Extremwert der Gütefunktion bestimmt wird.

5. Verfahren nach Anspruch 3 oder 4, **dadurch gekennzeichnet, dass** mindestens eine Gütefunktion $G_{Li}$ des Abstandes zu Achsanschlägen bestimmt wird.

6. Verfahren nach einem der Ansprüche 3 bis 5, **dadurch gekennzeichnet, dass** mindestens eine Gütefunktion $G_{Si}$ des Abstandes zu singulären Stellungen bestimmt wird.

7. Verfahren nach einem der Ansprüche 3 bis 6, **dadurch gekennzeichnet, dass** mindestens eine Gütefunktion des Abstandes zu dynamischen Extremwerten bestimmt wird.

8. Verfahren nach Anspruch 7, **dadurch gekennzeichnet, dass** eine Gütefunktion $G_{Vi}$ des Abstandes zur maximalen Geschwindigkeit bestimmt wird.

9. Verfahren nach Anspruch 7, **dadurch gekennzeichnet, dass** eine Gütefunktion $G_{Ai}$ des Abstandes zu maximalen Beschleunigungen bestimmt wird.

10. Verfahren nach einem der Ansprüche 3 bis 9, **dadurch gekennzeichnet, dass** eine Gütefunktion $G_{Xi}$ des Abstandes zu sonstigen Zwangslagen der Maschine bestimmt wird.

11. Verfahren nach einem der vorangehenden Ansprüche, **dadurch gekennzeichnet, dass** eine Mehrfach-Güte $G_M$ aus mehreren Einzelgüten gemäß den Ansprüchen 5 bis 10 bestimmt wird.

12. Verfahren nach einem der vorangehenden Ansprüche, **dadurch gekennzeichnet, dass** eine Gesamtgüte $G_{total}$ sämtlicher einzelnen Gütemaße gemäß den Ansprüchen 5 bis 9 bestimmt wird.

13. Verfahren nach einem der vorangehenden Ansprüche, **dadurch gekennzeichnet, dass** eine Optimierung des Gütemaßes iterativ erfolgt.

14. Verfahren nach einem der vorangehenden Ansprüche, **dadurch gekennzeichnet,**
    **dass** zunächst eine Berechnung der kartesischen Positionsvorgaben erfolgt,
    **dass** die einzelnen zur Berechnung der Gesamtgüte verwendeten Gütefunktionen unter Verwendung der zuletzt gegebenen Koordinaten im Redundanzraum und der Position des Werkzeugs berechnet und neue Koordinaten im Redundanzraum bestimmt werden.

15. Verfahren nach einem der vorangehenden Ansprüche, **dadurch gekennzeichnet, dass** nach Optimierung der Gütefunktion überprüft wird, ob die Veränderung der Stellung im Redundanzraum zur erhöhten Achsgeschwindigkeiten und/oder Beschleunigungen führt.

16. Verfahren nach einem der vorangehenden Ansprüche, **dadurch gekennzeichnet, dass** das Geschwindigkeitsprofil der Bewegung nicht verändert wird.

17. Verfahren nach einem der vorangehenden Ansprüche, **dadurch gekennzeichnet, dass** die Geschwindigkeit der Bewegung nicht herabgesetzt wird.

Fig. 1

Fig. 2a

Fig. 2b

Fig. 2c

Fig. 3

Fig. 4a

Fig. 4b

A — Bestimmung von $\underline{P}_{tool}$

B1 — Start der Iteration
$\underline{\Psi}_{last} = \underline{0}, \underline{P}_{red}$

B2 — Aufruf der jeweils letzten
Koordinaten $\underline{\Psi}_{last}$ und
Position $\underline{P}_{tool}$

B3 — Berechnung der Achsstellungen $\underline{q}(\underline{\psi})$

B4 — Bestimmung der Gütefunktionen $G_{Li}, G_{Vi}, G_{Ai}, G_{Si}$

B5 — Bestimmung der Gesamtgütefunktion $G_{total}(\underline{\psi})$

B8 — Schrittweitebestimmung $\underline{\Psi}_{step}$

B6 — Berechnung von
$\underline{\Psi}_{neu} = \underline{\Psi}_{last} + \underline{\Psi}_{step}$

B7 — $G_{total}(\underline{\Psi}_{neu})$ nein

B — ja

zulässige
Achsgeschwindigkeiten
und –beschleunigungen

C1 — Suchen eines
geeigneten $\underline{\psi}$

D — ja

Übergeben der erhaltenen
Achsstellungen an die Regelung

**Fig. 5**

12